# EUROPEAN PATENT APPLICATION

(11) **EP 4 768 210 A1**
(43) Date of publication of application: **01.07.2026**
(21) Application number: 25224436.3
(22) Date of filing: 17.12.2025
(51) Int. Cl.: B28B 17/00, B28B 19/00, G01N 3/40

(54) **SYSTEM AND METHOD FOR QUALITY INSPECTION OF PLASTERBOARDS DURING MANUFACTURING**

(30) Priority: 31.12.2024 BE 202405969
(71) Applicant: B. en N. Knauf en Co, 8710 Wielsbeke (BE)
(72) Inventor: STEELAND, Carmen, 8710 Wielsbeke (BE)
(74) Representative: Calysta NV

(57) **Abstract**

A method for manufacturing plasterboard based on predefined quality parameters comprising the steps of mixing a combination of calcined gypsum, water, and hardness-enhancing additives to form a slurry (102), dispensing it onto a facing sheet (103) and encapsulating it with another sheet (104) to form a hardened plasterboard, measuring the hardness by a durometer (109) by applying a force onto a durometer's (109) indenter (110), whereby the force is limited to a threshold based on the combination, calculating a deviation between a desired hardness and the measured hardness, and providing deviation-related data for further use.

## Description

### Technical Field

The present invention relates to the field of manufacturing plasterboards, more particularly to an automated quality control and inspection system for detecting deviations during their production in an industrial environment.

### Prior art

Plasterboards, also referred to as drywall, gypsum boards, or wallboards, are widely used construction materials designed for creating interior walls and ceilings. These panels are composed primarily of gypsum, a mineral known for its fire-resistant and sound-insulating properties, which is encased between sheets of durable paper or fiberglass. Plasterboards are valued for their ease of installation, cost-effectiveness, and versatility in residential, commercial, and industrial building projects. They provide a smooth surface that can be painted or otherwise finished to meet aesthetic and functional requirements. These building materials are integral to modern construction due to their lightweight structure, sustainability, and ability to enhance building performance.

The production of plasterboards involves a series of carefully controlled industrial processes designed to ensure consistent quality and performance. The process begins with the preparation of gypsum, the primary raw material, which is either naturally mined or synthetically produced as a byproduct of industrial processes. The gypsum is crushed and ground into a fine powder before being calcined in kilns to remove moisture, converting it into calcium sulfate hemihydrate, commonly known as stucco.

In the next stage, the calcined gypsum is mixed with water and various additives to form a slurry. Additives can include agents to improve fire resistance, reduce water absorption, or enhance strength. In the latter case, hardness-enhancing additives are chosen from a group of polymer-based compounds, minerals, resins, and/or fibers, for incorporation into the slurry. The slurry is then poured onto a continuous sheet of paper or fiberglass, which forms the board's facing layer. A second sheet of paper or fiberglass is applied on top, sandwiching the slurry. The layered material is pressed and shaped to achieve the desired thickness and dimensions.

The continuous sheet of wet plasterboard is then cut into standard lengths and passed through a drying kiln. The drying process is critical, as it removes excess moisture and allows the gypsum to set and harden. Controlled temperature and humidity ensure uniform drying and prevent warping or defects. Once dried, the boards are trimmed to precise dimensions, and their edges may be shaped, e.g., tapered, for easier joining during installation.

Quality control is an integral part of the manufacturing process. Advanced inspection systems monitor the boards at various stages to detect deviations such as thickness variations, surface defects, or structural inconsistencies. The finished boards are then stacked, packaged, and prepared for transport to construction sites or distributors.

Document EP1555099B1 describes an apparatus for producing plasterboard with a quality inspection for defect detection, enhancing product quality. The quality inspection system monitors the slurry density and evaluates the quality of gypsum boards post-production. Every hour, one gypsum board is randomly selected from the production line for sampling. The sampled board undergoes a hardness test at the side edges and an adhesiveness test to assess its quality. A disadvantage of this quality inspection system is its reliance on periodic sampling, which may fail to detect defects in boards produced between sampling intervals, potentially allowing substandard products to go unnoticed and reach the market.

Document EP3268332B1 describes hydrophobic finish compositions designed for application to building products, such as boards, to enhance their water resistance. The production process involves applying these compositions to the surface of boards during manufacturing, ensuring uniform coverage to achieve the desired hydrophobic properties. Quality inspection procedures are integrated into the production line to monitor the application process, verifying that the finish meets specified standards for thickness and uniformity. For example, the mixture temperature and viscosity of the slurry is monitored for two hours. A disadvantage of monitoring the mixture temperature and viscosity of the slurry for only two hours is that it provides a limited window for quality control, potentially missing variations or inconsistencies that could occur later in the production process, leading to nonuniform product quality.

Document EP2355976B1 outlines a method for manufacturing gypsum boards with enhanced properties. The process involves forming a gypsum slurry, which is then spread onto a moving conveyor to shape the board. An aspect of this method is the incorporation of specific additives into the slurry to improve the board's characteristics, such as strength and moisture resistance. Once the slurry is shaped, it undergoes setting and drying stages to solidify the board. Quality inspection procedures are integrated into the production line to ensure that the boards meet the desired specifications. These inspections typically include monitoring the consistency of the slurry, checking the uniformity of the board's thickness, and assessing the surface finish. Additionally, mechanical tests may be conducted to evaluate the board's strength and durability, ensuring that each product adheres to industry standards and performance requirements. These tests are conducted post-production, meaning they evaluate the quality of the product only after it has been manufactured. This approach has limitations, as it does not allow for real-time detection and correction of defects during the production process. Consequently, any issues identified during these post-production tests may result in wasted materials, increased costs, and delays in addressing production inefficiencies.

There is therefore a clear need for a quality inspection system integrated directly into the manufacturing process to address the aforementioned and other disadvantages. Such a system would enable real-time monitoring and immediate identification of defects or inconsistencies, allowing for corrective actions to be taken promptly. This proactive approach could improve production efficiency, reduce material waste, and ensure consistent product quality, ultimately lowering costs and minimizing delays associated with post-production quality control methods.

### Brief summary of the invention

It is the objective of the invention to provide a quality system that effectively addresses the above identified needs and overcomes the existing limitations.

According to the invention, this object is solved by the system of the first claim for manufacturing plasterboard in a production process at an industrial environment based on predefined quality parameters comprising:
- a mixer for mixing a first combination of calcined gypsum, water, and hardness-enhancing additives selected from a group comprising polymer-based compounds, minerals, resins, and/or fibres, to form a slurry, wherein the first combination leads to a first predefined hardness;
- an input unit configured to receive data pertaining to the mixer;
- a production line commencing at the mixer for performing the steps of:
   ∘ dispensing the slurry onto a first facing sheet and encapsulating it with a second facing sheet;
   ∘ shaping and hardening the encapsulated slurry to form a hardened plasterboard;
- a durometer positioned at a first interval from the mixer along the production line configured to measure the hardened plasterboard's hardness by applying a predetermined force onto the durometer's indenter thereby pressing it into the surface of the hardened plasterboard while conveying along the production line;
- a processing unit operatively connected to the durometer, and to the input unit, wherein the processing unit is configured to instruct the durometer to limit the predetermined force to a predefined threshold based on the first combination and the first interval, and further configured to calculate a deviation between the first predefined hardness and the measured hardness;
- an output unit operatively connected to the processing unit for presenting the deviation and/or enabling further processing.

The mixer is designed to blend a combination of calcined gypsum, water, and hardness-enhancing additives to produce a slurry. These additives are selected from a group comprising polymer-based compounds, minerals, resins, and/or fibres. The resulting slurry is formulated to achieve a predefined level of hardness, ensuring that the final product meets specific performance criteria. This precise control over the mixing process and ingredient selection allows for consistent quality and tailored mechanical properties in the finished material.

Hardening refers to the process whereby the aqueous gypsum slurry transitions from a pliable state to a rigid, mechanically stable structure. This transformation occurs through the hydration of calcium sulfate hemihydrate (CaSO₄ ·½H₂O), commonly known as calcined gypsum, into calcium sulfate dihydrate (CaSO₄ ·2H₂O). During this process, water molecules chemically bond with the gypsum, forming a crystalline matrix that imparts structural integrity to the board. The hardening phase is typically controlled to ensure uniformity and strength in the final product, often involving specific environmental conditions such as regulated temperature and humidity. However, as is well known to those skilled in the art, even when the slurry is prepared with the optimal combination of components, various external factors can still affect the quality of the final hardened product. Examples of such factors include ambient humidity and temperature, the inherent quality of the raw materials used, and other environmental influences.

The system further comprises an input unit designed to acquire data related to the mixer. This data is related to the slurry composition and can be utilized by a processing unit for subsequent operations within the system, as will be further detailed. The data also includes a timestamp indicating when the mixer produces the specified composition.

The system further comprises a production line that begins at the mixer and is designed to streamline the manufacturing process of plasterboard. The production line carries out key steps to ensure consistent product quality and efficiency. First, the slurry prepared in the mixer is dispensed onto a first facing sheet, serving as the foundational layer. A second facing sheet is then applied to encapsulate the slurry, creating a sandwich-like structure. This encapsulated material is subsequently shaped to achieve the desired dimensions and surface finish. Finally, the encapsulated slurry undergoes a controlled hardening process, allowing it to harden into a durable plasterboard. The integrated production line minimizes manual intervention, ensuring uniformity and precision in the final product while optimizing production speed.

According to a new and innovative aspect, the system further comprises a durometer integrated into the production process. The durometer is positioned at an interval from the mixer along the production line. In the context of this disclosure, an interval refers to the spacing and/or timing between successive operations, components, or stages in the production process. It accounts for both the physical distance along the line and the time required for the line to transport items between these points, which is influenced by the production line's speed. Both spatial and temporal factors determine the interval. However, it should be clear that the durometer is positioned after the shaping and hardening step of the encapsulated slurry to form the hardened plasterboard.

A durometer is a specialized instrument used to measure the hardness of plasterboard, providing a precise assessment of its mechanical properties. This device operates by applying a standardized force onto the plasterboard surface through an indenter, which penetrates to a degree determined by the material's resistance. The durometer's readings are crucial for evaluating the consistency and quality of plasterboards, ensuring they meet predefined specifications for strength and durability. By detecting variations in hardness, the durometer helps identify potential production inconsistencies, enabling manufacturers to make necessary adjustments to maintain product standards.

In contrast to the prior art, where a durometer is used post-production, the inventors identified that it is an advantage to use a durometer in the production process itself. This way there is a faster identification of defects, which significantly reduces waste by allowing immediate corrective actions to be taken during the production process. Early detection minimizes the production of non-compliant plasterboards, ensuring that resources such as raw materials and energy are utilized more efficiently. Additionally, this proactive quality control enhances overall production efficiency, reduces downtime associated with addressing defects, and contributes to more sustainable manufacturing practices by lowering the environmental impact of waste disposal.

To this end, the system further comprises a processing unit operatively connected to the input unit, to the durometer, and to an output unit as will be further discussed.

The processing unit serves multiple critical functions within the system and thus the production process, acting as the central hub for data analysis, control, and decision-making. It processes input data originating from the input unit and thus, whether indirectly or not, from the mixer and therefore the slurry composition, but also production speed. If further controls the durometer, and more in particular the predetermined force of the indenter that pushes onto the plasterboard's surface. The processing unit regulates and limits the applied force to ensure precise and consistent operation of the durometer. By maintaining the force within predefined thresholds, it prevents damage to the plasterboard's surface and ensures uniformity in the process. Furthermore, the system enhances the accuracy and speed of hardness measurements by incorporating an anticipatory mechanism that predicts the expected hardness value. This predictive capability allows the system to compare real-time measurements against predefined benchmarks, streamlining the evaluation process and reducing the margin of error. By aligning measurements with anticipated values, it enables quicker identification of inconsistencies or deviations, ensuring a higher level of quality control. Additionally, this approach minimizes the need for manual adjustments, increases efficiency in the inspection process, and supports consistent production standards by providing actionable insights to refine the manufacturing parameters.

To determine the threshold or limit of the predetermined force, the processing unit uses the data related to the combination, and thus the composition of the hardened plasterboard, combined with the interval. The combination determines an expected hardness of the final product by considering factors such as the composition of the slurry, the specific additives used, and the processing parameters. This expected hardness serves as a benchmark for evaluating the quality and performance of the finished product. Meanwhile, the interval determines the hardness of an intermediate product, offering a snapshot of the plasterboard's progress during the manufacturing process. Thus, instead of waiting until the product is finished, one can measure at the intermediate product that aligns with predefined expectations, ultimately contributing to the consistency and reliability of the final product. This approach enhances the overall control and precision of the production process, reducing waste and improving efficiency.

Finally, a deviation is calculated as the difference between the expected hardness and the measured hardness, providing a clear metric to assess the consistency of the plasterboard. This deviation is then presented by an output unit, such as a screen, for immediate visibility, and is also made available for further processing within the system, as will be further discussed. By displaying this information in a user-friendly manner, operators can quickly identify discrepancies and take corrective action when necessary, such as adjusting the slurry composition, mixer settings, or production parameters. Additionally, the system can trigger automated responses based on predefined thresholds for acceptable deviations, further enhancing efficiency and minimizing the risk of defects. This dual functionality-manual intervention and automated control-ensures a robust quality control process that maintains high standards throughout production, reducing waste and improving overall operational effectiveness.

The measuring step is, for example, conducted at a predefined frequency, ensuring consistency and precision in the measurement process. The predefined frequency is specifically determined based on the first combination and the first interval, allowing for optimized measurement timing tailored to the specific application. This approach ensures that the measurements align with the desired operational parameters, providing accurate and reliable data for further analysis or control. By systematically defining the intervals and frequency, the process achieves a balance between efficiency and accuracy, enhancing the overall effectiveness of the measurement system.

According to an embodiment, the system further comprises interrupting means operatively connected to the processing unit and configured for interrupting the production process when the deviation exceeds a predetermined threshold.

The system further comprises interrupting means operatively connected to the processing unit, designed to halt the production process when a detected deviation exceeds a predetermined threshold. This mechanism acts as a safeguard to prevent the production of defective plasterboards by immediately pausing operations when quality control parameters are violated. By integrating with the processing unit, the interrupting means can respond in real-time to deviations calculated during the manufacturing process, ensuring that out-of-specification products are not completed or advanced further along the production line. This functionality not only reduces material waste and minimizes the costs associated with rework or discarding defective items but also allows operators to investigate and address the root cause of the issue before resuming production. The interrupting means is a critical component of the quality assurance system, promoting consistent adherence to product specifications and enhancing overall production efficiency.

According to an embodiment, the mixer is further configured for adapting the mixing to a second combination that leads to a second predefined hardness, and wherein the processing unit is further configured to limit the predetermined force to a second predefined threshold based on the second combination and the first interval after a predefined first time period following the adapting step, wherein the predefined first time period is based on the second combination and the first interval.

It should be understood that the system operates in a similar manner for the second combination as it does for the first combination, ensuring consistent functionality across different stages of the process. This uniformity in operation allows the system to seamlessly adapt to changes in material composition, maintaining reliability and precision. By applying the same principles and mechanisms to both combinations, the system ensures that quality control, parameter adjustments, and measurements are consistently managed, regardless of the desired hardness involved. Note however that only after a predefined first time period following the adapting step, the system reassesses the process parameters to ensure that the desired changes have achieved their intended effect. This predefined first time period is calculated based on the characteristics of the second combination of materials and the first interval in the production process. By tailoring the timing to the specific properties of the materials and the process dynamics, the system allows sufficient time for the adjustments to influence the production outcome meaningfully. This approach ensures that subsequent measurements and evaluations reflect the impact of the changes accurately, enabling precise quality control and optimization of the final product. The predefined first time period serves as a critical buffer, aligning process adjustments with the material response and maintaining the efficiency and reliability of the overall manufacturing system. This way false positives are avoided ensuring that deviations in quality metrics are accurately identified without incorrectly signalling defects.

According to an embodiment, the system further comprises a temperature sensor operatively connected to the processing unit positioned at a second interval from the mixer along the production, the second interval being smaller than the first interval, the temperature sensor configured to measure the surface temperature of the plasterboard, and wherein the processing unit is further configured to limit the predetermined force based on the measured temperature.

The system may further comprise a temperature sensor strategically positioned between the mixer and the durometer to measure the plasterboard's surface temperature during production. By capturing real-time temperature data, the sensor enables the system to assess whether the plasterboard has been adequately processed before hardness testing. This information is integrated into the quality control workflow by the processing unit, allowing for adjustments to hardening or processing parameters if deviations from the optimal temperature range are detected. The inclusion of this temperature sensor enhances the precision and reliability of the manufacturing process, ensuring consistent product performance and reducing the likelihood of defects caused by thermal inconsistencies. Furthermore, if deviations are detected, the processing unit will further limit the predetermined force based on the measured temperature, while still taking into account the data related to the first or second combination.

According to an embodiment, the system further comprises sawing means along the production line at a third interval after the durometer configured to cut the plasterboard to predetermined dimensions in accordance with predefined product parameters, wherein the processing unit is further configured to temporarily instruct the sawing means to cut the plasterboard during a second predefined time period into pieces suitable for removing from the production process, the second predefined time period based on and initiated by the adapting step.

The system comprises sawing means designed to cut the plasterboard into predetermined dimensions, ensuring the final product adheres to predefined specifications. These sawing means are operatively connected to the processing unit and in normal operations conditions, thus when no deviations are detected, the sawing means saw the plasterboard as just explained. The sawing means are therefore also present in the set-up according to the first claim. Since the sawing means are operatively connected to the processing unit, it can also intervene when the quality measurements-such as hardness and surface temperature-fall outside the expected ranges, in other words when a deviation is detected. When such a deviation is detected, the sawing means cut the plasterboard into pieces suitable for removing from the production process. This way, they can easily be removed by an operator.

According to a second aspect of the invention a method is disclosed for manufacturing plasterboard in a production process at an industrial environment based on predefined quality parameters along a production line at a predetermined speed, the method comprising the steps of:
- mixing a first combination of calcined gypsum, water, and hardness-enhancing additives selected from a group comprising polymer-based compounds, minerals, resins, and/or fibres, to form a slurry, wherein the first combination leads to a first predefined hardness;
- dispensing the slurry onto a first facing sheet and encapsulating it with a second facing sheet;
- shaping and hardening the encapsulated slurry to form a hardened plasterboard;
- measuring the hardened plasterboard's hardness by a durometer positioned at a first interval from the mixer by applying a predetermined force onto the durometer's indenter thereby pressing it into the surface of the hardened plasterboard while conveying along the production line, whereby the predetermined force is limited to a predefined threshold based on the first combination and the first interval;
- calculating a deviation between the first predefined hardness and the measured hardness;
- providing deviation-related data for further use.

The method is designed to correspond with the system described in the first aspect, ensuring seamless integration and functionality. This alignment allows the method to leverage the system's features, such as real-time quality control, data processing, and automated adjustments, to perform its operations effectively.

According to an embodiment, the measuring step is performed at a predefined frequency based on the first combination and the first interval.

In accordance with an embodiment, the method further comprises the step of:
- interrupting the production process when the deviation exceeds a predetermined threshold.

In accordance with a further embodiment, the method further comprises the step of:
- adapting the mixing to a second combination that leads to a second predefined hardness;
- limiting the predetermined force to a second predefined threshold based on the second combination and the first interval after a predefined first time period following the adapting step, wherein the predefined first time period is based on the second combination and the first interval.

In accordance with a further embodiment, the method further comprises the step of:
- measuring the surface temperature of the plasterboard at a second interval from the mixer along the production, the second interval being smaller than the first interval;
- limiting the predetermined force based on the measured temperature.

In accordance with a further embodiment, the method further comprises the step of:
- measuring the surface temperature of the plasterboard at a second interval from the mixer along the production, the second interval being smaller than the first interval;
- limiting the predetermined force based on the measured temperature.

According to a third aspect a computer-implemented method is disclosed for instructing the processing unit according to the first aspect to perform the method according to the second aspect.

According to a fourth aspect, a computer readable storage medium is disclosed comprising instructions which, when executed by a computer, cause the computer to carry out the steps of the method according to the third aspect.

According to a fifth aspect, a computer program is disclosed comprising program code instructions which, when executed by a computer, cause the computer to carry out the method according to the third aspect.

### Brief description of the Drawings

Figure 1 illustrates a schematic representation of a production line configured for the manufacture of plasterboard;
Figure 2 provides an alternative schematic representation, maintaining the same structure as Figure 1, to illustrate intervals; and
Figure 3 schematically depicts the various elements of the system in interaction with a processing unit.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

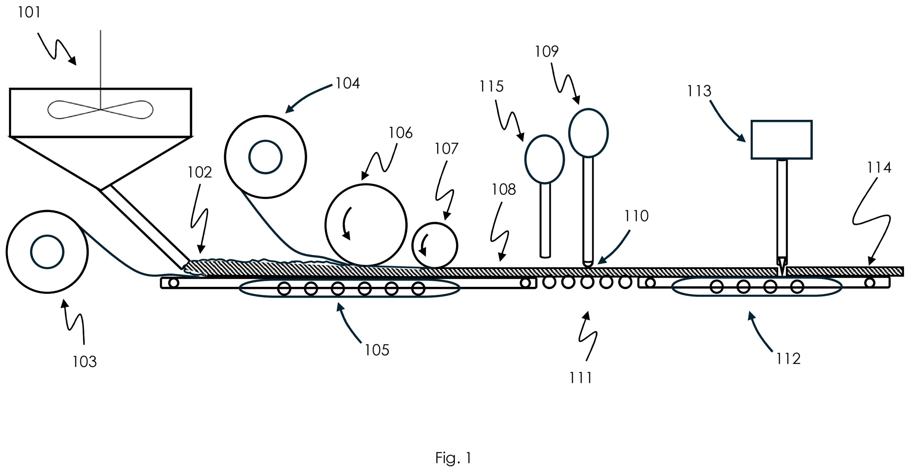

Figure 1 illustrates a schematic representation of a production line configured for the manufacture of plasterboard 114, comprising various interconnected components and stages designed to process a slurry 102, form the plasterboard 114, and complete the production process. The production line comprises key elements such as a mixer 101, forming equipment 106, 107, and sawing means 113, each playing a specific role in ensuring the efficient and consistent production of high-quality plasterboard.

Within the mixer 101, a slurry 102 is prepared by combining calcined gypsum, water, and hardness-enhancing additives. These additives are selected from a group that includes polymer-based compounds, minerals, resins, and fibres. The precise composition of the additives can be tailored to achieve desired mechanical properties, such as increased strength, durability, and flexibility, ensuring the final plasterboard product meets specific performance requirements for various applications.

The slurry 102 is dispensed onto a first facing sheet, which is continuously unrolled from an unwinding tape 103 and guided along a conveyor belt 105. A second facing sheet is simultaneously unrolled from a second unwinding tape 104 and applied over the slurry 102, sandwiching it between the two facing sheets. This arrangement ensures the formation of a composite structure as the materials move together along the production line. The precise coordination between the unwinding tapes 103, 104 and the conveyor belt 105 maintains consistent tension and alignment of both facing sheets, ensuring uniform encapsulation of the slurry 102 and minimizing defects in the final product.

Along the production line, a series of shaping rolls 106, 107 is strategically positioned to shape and evenly distribute the encapsulated slurry 102 between the two facing sheets, ensuring the desired thickness and uniformity of the product. These rolls 106, 107 not only help in forming the gypsum board to precise specifications but also aid in maintaining consistent pressure, which enhances the bond between the facing sheets and the slurry 102. As the composite structure progresses further along the line, the shaping rolls 106, 107 contribute to stabilizing the material, while controlled environmental conditions support the ongoing hardening process 108, ensuring the board achieves the necessary structural integrity and mechanical properties before entering subsequent stages such as cutting 113 and drying.

Once the hardening process 108 is complete, the surface temperature of the hardened plasterboard is measured by a temperature sensor 115. The temperature sensor 115 is for example a non-contact temperature sensor that uses infrared technology to detect the thermal radiation emitted by the surface and convert it into a temperature reading.

Next, the hardness of the plasterboard is assessed using a durometer 109. This step is critical for quality control, as it ensures the plasterboard meets the required mechanical strength and durability standards before moving to the cutting stage which is performed by sawing means 113. The hardness is measured by applying a predetermined force onto the durometer's indenter 110 thereby pressing it into the surface of the hardened plasterboard while conveying along the production line.

At the position of the durometer 109, the production line comprises dedicated rolls 111 to ensure that the measurement is accurate. Furthermore, the strategically positioned rolls 111 further ensure that the plasterboard does not get damaged while performing the measurements.

After the measurements of the hardness with the durometer 109, the plasterboard continues at the second conveyor belt 112 towards the sawing means 113 to cut the plasterboard to predetermined dimensions in accordance with predefined product parameters. The cut plasterboard 114 is subsequently directed to a dryer.

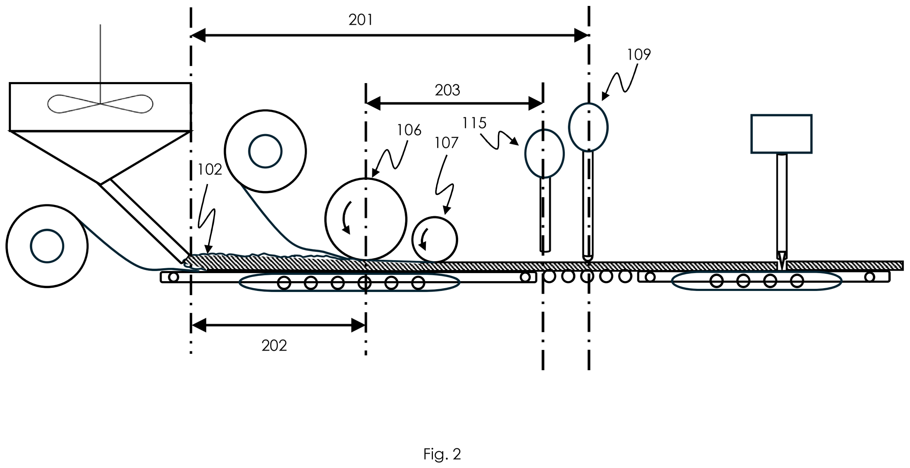

With reference to Figure 2 provides an alternative schematic representation as Figure 1 with the same structure, the intervals are illustrated. An interval refers to the spacing and/or timing between the successive operations in the production process. Interval 201 between the mixer 101 and the durometer 109 therefore refers to the spacing in the meaning of the physical distance between the location where the slurry 102 is poured onto the sheet 103 and the durometer 109, but also on the timing required to convert the slurry 102 into a hardened plasterboard, enabling the measurement of its hardness. The interval 102 therefore determines, together with the composition of the slurry 102, the hardness of the intermediate product at the location of the durometer 109. Another interval 203 is that of the spacing between the mixer 101 and the temperature sensor 115.

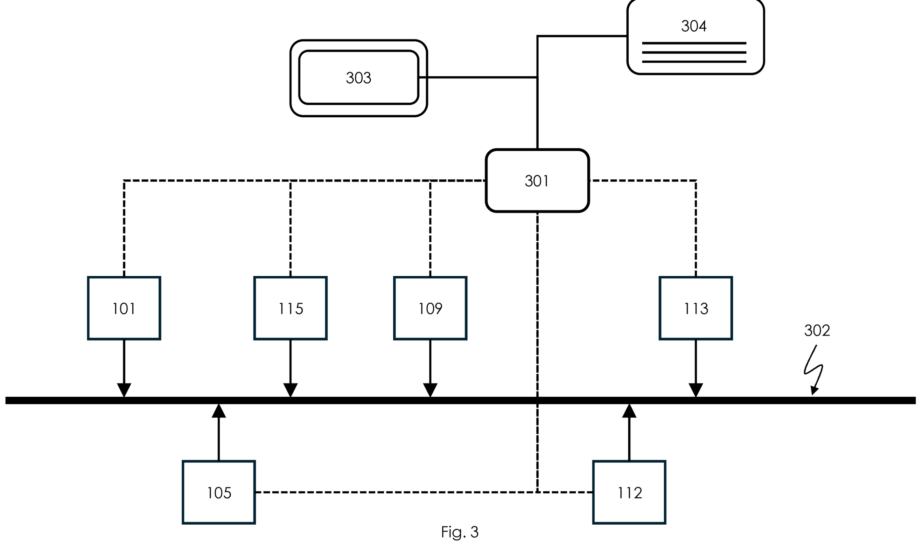

The different elements and/or components of the production line are directly or indirectly operatively connected with each other. This is illustrated in Figure 3, which schematically depicts the various elements of the system in interaction with processing unit 301. Through a universal gateway 302, data can be exchanged seamlessly between various components of the system and processed by the central processing unit 301. This gateway 302 facilitates efficient communication and integration, ensuring that all components operate cohesively within the production process. The processing unit 301 is further connected to a display 303, which provides real-time visualization of data and system status, enabling operators to monitor critical aspects of the production process. Additionally, the processing unit interfaces with a keyboard 304, allowing operators to input and modify data as needed, such as the combination of elements in the mixer 101.

It should be understood that the present invention is not limited to the described embodiments and that variations can be applied without going outside of the scope of the claims.

## Claims

1. A system for manufacturing plasterboard in a production process at an industrial environment based on predefined quality parameters comprising:
- a mixer (101) for mixing a first combination of calcined gypsum, water, and hardness-enhancing additives selected from a group comprising polymer-based compounds, minerals, resins, and/or fibres, to form a slurry (102), wherein the first combination leads to a first predefined hardness;
- an input unit (304) configured to receive data pertaining to the mixer (101);
- a production line (105, 111, 112) commencing at the mixer (101) for performing the steps of:
∘ dispensing the slurry (102) onto a first facing sheet (103) and encapsulating it with a second facing sheet (104);
∘ shaping (106, 107) and hardening (108) the encapsulated slurry to form a hardened plasterboard;
- a durometer (109) positioned at a first interval (201) from the mixer (101) along the production line (105, 111, 112) configured to measure the hardened plasterboard's hardness by applying a predetermined force onto the durometer's (109) indenter (110) thereby pressing it into the surface of the hardened plasterboard while conveying along the production line (105, 111, 112);
- a processing unit (301) operatively connected to the durometer (109), and to the input unit (304), wherein the processing unit (301) is configured to instruct the durometer (109) to limit the predetermined force to a predefined threshold based on the first combination and the first interval (201), and further configured to calculate a deviation between the first predefined hardness and the measured hardness;
- an output unit (303) operatively connected to the processing unit (301) for presenting the deviation and/or enabling further processing.

2. The system according to claim 1, further comprising:
- interrupting means operatively connected to the processing unit (301) and configured for interrupting the production process when the deviation exceeds a predetermined threshold.

3. The system according to any of the preceding claims, wherein the mixer (101) is further configured for adapting the mixing to a second combination that leads to a second predefined hardness, and wherein the processing unit (301) is further configured to limit the predetermined force to a second predefined threshold based on the second combination and the first interval (201) after a predefined first time period following the adapting step, wherein the predefined first time period is based on the second combination and the first interval (201).

4. The system according to any of the preceding claims further comprising a temperature sensor (115) operatively connected to the processing unit (301) positioned at a second interval (202) from the mixer (101) along the production line, the second interval (202) being smaller than the first interval (201), the temperature sensor (115) configured to measure the surface temperature of the plasterboard, and wherein the processing unit (301) is further configured to limit the predetermined force based on the measured temperature.

5. The system according to any of the claims 3 to 4, the system further comprising sawing means (113) along the production line at a third interval after the durometer (109) configured to cut the plasterboard to predetermined dimensions in accordance with predefined product parameters, wherein the processing unit (301) is further configured to temporarily instruct the sawing means (113) to cut the plasterboard during a second predefined time period into pieces suitable for removing from the production process, the second predefined time period based on and initiated by the adapting step.

6. A method for manufacturing plasterboard in a production process at an industrial environment based on predefined quality parameters along a production line (105, 111, 112) at a predetermined speed, the method comprising the steps of:
- mixing a first combination of calcined gypsum, water, and hardness-enhancing additives selected from a group comprising polymer-based compounds, minerals, resins, and/or fibres, to form a slurry (102), wherein the first combination leads to a first predefined hardness;
- dispensing the slurry (102) onto a first facing sheet (103) and encapsulating it with a second facing sheet (104);
- shaping (106, 107) and hardening (108) the encapsulated slurry (102) to form a hardened plasterboard;
- measuring the hardened plasterboard's hardness by a durometer (109) positioned at a first interval (201) from the mixer (101) by applying a predetermined force onto the durometer's (109) indenter (110) thereby pressing it into the surface of the hardened plasterboard while conveying along the production line (105, 111, 112), whereby the predetermined force is limited to a predefined threshold based on the first combination and the first interval;
- calculating a deviation between the first predefined hardness and the measured hardness;
- providing deviation-related data for further use.

7. The method according to claim 6, wherein the measuring step is performed at a predefined frequency based on the first combination and the first interval (201).

8. The method according to any of the claim 6 to 7, further comprising the step of:
- interrupting the production process when the deviation exceeds a predetermined threshold.

9. The method according to any of the claim 6 to 8, further comprising the steps of:
- adapting the mixing to a second combination that leads to a second predefined hardness;
- limiting the predetermined force to a second predefined threshold based on the second combination and the first interval after a predefined first time period following the adapting step, wherein the predefined first time period is based on the second combination and the first interval (201).

10. The method according to any of the claims 6 to 9, further comprising the steps of:
- measuring the surface temperature of the plasterboard at a second interval (202) from the mixer (101) along the production, the second interval (202) being smaller than the first interval (201);
- limiting the predetermined force based on the measured temperature.

11. The method according to any of the claims 9 to 10, further comprising the step of:
- temporarily sawing the plasterboard along the production line after the step of measuring the hardness during a second predefined time period into pieces suitable for removing from the production process, the second predefined time period based on and initiated by the adapting step.

12. A computer-implemented method for instructing the processing unit according to any of the claims 1 to 5 to perform the method according to any of the claims 6 to 11.

13. A computer readable storage medium comprising instructions which, when executed by a computer, cause the computer to carry out the steps of the method according to claim 12.

14. Computer program comprising program code instructions which, when executed by a computer, cause the computer to carry out the method according to claim 12.
